# EUROPEAN PATENT SPECIFICATION

(11) **EP 0 560 789 B1**
(45) Date of publication and mention of the grant of the patent: **19.03.1997**
(21) Application number: 91919296.3
(22) Date of filing: 09.10.1991
(51) Int. Cl.: F16B 25/00

(54) **IMPROVED FIXING**
BEFESTIGUNG
PROCEDE DE FIXATION AMELIORE

(30) Priority: 14.12.1990 GB 9027192; 28.06.1991 GB 9114048; 30.09.1991 GB 9120729
(43) Date of publication of application: 22.09.1993
(73) Proprietor: Bickford, Charles, Hockley Essex SS5 4RW (GB)
(72) Inventor: Bickford, Charles, Hockley Essex SS5 4RW (GB)
(74) Representative: Lawrence, Malcolm Graham
(86) International application number: GB9101754
(87) International publication number: WO9210688

(56) References cited:
- DE-A- 3 615 271
- GB-A- 274 833
- GB-A- 1 541 237
- GB-A- 2 042 120

## Description

The invention relates to methods of fixing applied to masonry or timber substrates and to masonry or timber fixing devices.

Conventional threaded fixing devices such as screws are difficult to secure in masonry substrates since it is difficult for a conventional thread to find secure location within a bore in such a substrate. Conventional screw threaded fixings are accordingly conventionally secured within bores in masonry substrates by first lining the bore with a lining of relatively soft material into which the threaded fixing can cut its own thread, at the same time compressing the lining against the walls of the bore within the masonry substrate. A typical example of such a lining is that sold under the trade mark Rawlplug. Such linings are available in fibrous and plastics material form and in a wide variety of configurations reflecting a very considerable activity in the art over the years to improve upon the security and ease of use of screw threaded fixing devices used with such liners.

Adopting a somewhat similar principle, alternative forms of fixing device are of metallic material and structured so as to be expansible after introduction into a bore in a masonry material whereby compressive forces against or impingement into the internal surfaces of the bore resist withdrawal of the fixing device from the bore. Reflecting similarly substantial activity in the art, a wide variety of such devices are available. For example, various devices of this kind are available under the above-mentioned trade mark Rawlplug and under the trade mark Fischer.

The Upat TOP self undercutting anchor comprises an internally threaded cylindrical tubular steel sleeve and a cone received in one open end of the sleeve. A splined lower part of the cylindrical sleeve is in contact with the inclined walls of the cone, these walls being divergent in the direction away from the sleeve. The above described assembly is inserted into a pre-drilled bore until the extremity of the cone (ie the base of the conical portion) comes into contact with the end of the bore. Application of light pressure from a hammer drill causes the splined section to be forced over the conical surface, the splines having tungsten carbide tips which undercut the substrate material. The Upat EXA Express Anchor also operates an expansion fixing but does not operate on the undercutting principle.

Fixing devices somewhat similar to those sold under the trade mark Rawlplug are also sold under the trade mark Fischer, as mentioned earlier. Fixing devices are also made by Fischer which are somewhat similar in structure and operation to the above-described Upat fixing elements. The Fischer Wallbolt comprises a segmented malleable iron expander shield forming a sleeve about an orthodox screw threaded bolt. The combined assembly is in use inserted into a pre-drilled bore in a masonry substrate and the bolt is tightened with a spanner. This draws a terminal conical wedge backwards into the shield and forces four shield segments outwardly against the sides of the bore.

All fixing elements which rely on compression of an associated member into the wall of a pre-drilled bore give rise to structural disadvantages. The walls of the bore are placed under stress and in many substrate materials there is insufficient strength in the substrate structure to prevent cracking. This is particlarly the case with such materials as lightweight autoclaved aerated concrete but also applies to brick structures. It is especially evident adjacent apertures in a masonry structure where on one side at least there will be comparatively small thickness of substrate material. Of course, fixing elements are commonly required in aperture regions for the fixing of window frames, door liners and similar fittings.

Equally, a good deal of activity has been focused on improvement of screw threaded members themselves in order that they should find secure fixing in masonry materials without the use of liners and without internal expansion. The driving force in these respects is, of course, the fact that liners do not provide totally satisfactory degrees of security, the fact that the need to insert a liner in a bore represents an additional activity which has associated labour costs and the fact that in the case of expansion bolts and such like the compressive forces necessary for security of fixing can result, as noted above, in rupture of masonry materials particularly when adjacent to extremities of bodies of such materials.

UK Patent Specifications Nos 2 115 511 (ITW III) and 2 152 171 (ITW II) disclose masonry fixings comprising a shank having spaced threads in the form of a helical ridge alternating with a parallel land. The flanks of the threads intersect at an angle of 50° to 65° and exhibit a helix angle of 6° to 8.5°. These features are necessarily combined with special conditions for introduction into a masonry bore and are claimed to provide security of fixing without thread striping upon insertion. Both ITW II and III represent examples of effort in the art to provide threaded devices for direct securement in a bore so as to avoid the disadvantages of expansion-type devices enumerated above.

Coarse deep threads are also disclosed in a fixing for use in masonry-like structures in UK Patent Specification No 1 510 686 (ITW IV), a further example of an attempt to provide a direct-fixture fixing element. In this particular arrangement, the crests of the deep threads are notched in order to assist in the cutting of a thread by the fixture in use and to assist in the transmission of masonry debris within the bore. An intermediate shallower thread ridge appears to be the key to providing a design which enables security of fixture to be achieved whilst at the same time recognizing the need to minimize disturbment of the substrate material. Nevertheless, threads penetrate the substrate at fairly closely spaced positions such that pull-out performance is impaired by the shear resistance of the relatively small sections of substrate material between helical ridge turns. A similar arrangement is disclosed in European Patent Application No 0 133 773 (ITW I).

UK Patent Specification No 466039 (Jasper) discloses a fastening screw having a shank provided with a helical thread groove alternating with a land between the grooves. A longitudinal slot provides self-tapping capacity for the course deep thread. Jasper does not disclose the fastening screw for use in masonry structures.

A somewhat similar screw device is described in UK Patent Specification No 274833 (Rosenberg). The entry end screw thread configuration has a groove which penetrates the normal diameter of the fixing device together with raised border ridges, this configuration extending over a short length only of the shank. Rosenberg does not recommend the fixing device for masonry fixing, referring generally to fibrous and non-flowing materials and in particular to metal substrates.

European Patent Specification No 0 225 003 (JSM) and UK Patent Application No 2036227 (Tomoyasu) disclose self-locking screws having a somewhat similar configuration. Helical ridges either side of a small land have their crests grooved. Tomoyasu also refers to a structure in which the ridge crests are not grooved but an intermediate ridge is turned through the land so that there are in fact two parallel grooves forming an overall thread. Both JSM and Tomoyasu relate to self-locking devices reliant on the interaction of male and female threads and there is no disclosure of a use in which the male threaded portion is self-tappingly threadedly into a masonry bore.

UK Patent Specification No 2042120 (Gutshall) discloses a headed screw which incorporates a long-pitch helical thread rolled on a cylindrical blank. The rolling leaves untouched a land between adjacent convolutions of the thread. At each juncture between the root of the thread and the adjacent land a helical crest functioning as an auxiliary thread is provided to improve the holding power of the screw. Gutshall refers to use of the disclosed screw in soft, fibrous or low-density materials which are exemplified as wood and plastics. Gutshall does not appear to recommend the disclosed headed screw for fixture self-tappingly in a masonry substrate.

UK Patent Specification No 1541237 (Oratronics) discloses a threaded device for use as an endodontic stabilizer. The shank of the disclosed device is turned with a helical groove having a sufficiently wide pitch to provide a parallel inter-turn land. The crest of the ridge is grooved. UK Patent Specification No 1519139 (Crock) discloses a simpler structure for use in surgical techniques. The structure disclosed comprises a threaded shank comprising a thread groove somewhat reminiscent of that shown by Rosenberg as mentioned above. Crock refers skirtingly and somewhat speculatively to application in building construction and associated fields but there is no reference specifically to the use of the disclosed device for self-tappingly securing in a masonry bore.

According to an embodiment of the invention, there is provided in a preferred embodiment a method of fixing to masonry substrates (eg brickwork, blockwork or concrete) wherein a bore is formed in said substrate (eg in the tension zone or compression zone of a concrete load-supporting member such as a concrete beam) and a fixing device is introduced into said bore self-tappingly or otherwise the fixing device comprising a shank having a bore entry end and an opposed optionally headed end separated from the bore entry end by the length of the shank, at least a portion of the shank length being configured with a thread rolled helical groove depressed into the blank circumference of the shank so as plastically to displace shank material to at least one of the groove sides, the groove being defined adjacent a helical ridge juxtaposed to a side of the groove or, as is preferred, between a pair of parallel helical ridges juxtaposed one either side of the groove and formed in either case of said plastically displaced shank material, said ridges being upstanding from the blank circumference of the shank so as to function in use each as a male thread, at least the leading end of the thread preferably being a female thread-cutting male thread in relation to the masonry, said helical ridges and defined helical groove forming a helical configuration whose convolutions are spaced apart by an intervening land in relation to which the ridges are raised and the groove is depressed, said land having a width measured axially with respect to the shank of at least 50% of the land shank diameter and the helix angle of the helical ridge being at least 8° and preferably 10° (or more). Of course, the ridge/groove shank configuration may alternatively be formed by turning from eg a solid bar, by casting or by any other method and the invention includes fixing devices so made. The land immediately adjacent the aforesaid shank configurations may be configured (at one or both sides) with a recess running helically of the shank and representing a minor depression relative to the helical groove of the said shank configurations. The male thread may be interrupted by cut-outs at least at the tip in order to confer a thread-cutting facility providing for self-tapping performance. The depressed groove in practice serves to contain substrate debris removed by the self-tapping action. The device used in the invention is unusual in providing a method of fixing in a concrete tension zone; most masonry fixings are designed to operate in the compression zone of concrete members and fail to perform satisfactorily in the tension zone (undercut anchors such as the Upat TOP Anchor being one of a very few exceptions to this).

The fixing device will ordinarily be inserted into a slightly oversized bore (and thus the shank of the device will be slightly undersized in terms of diameter relative to the drill diameter used to produce the bore) in order to avoid an interference fit (which will obstruct threaded insertion).

The shank may be made of a metallic material which is plastically deformable by cold rolling through a die configured to form the helical ridges and helical groove. The shank may, for example, be made of a ferrous metallic material. Although this material may be iron, it is more typically a ferrous alloy such as carbon steel or possibly stainless steel or similar material which resists corrosion through contact with moisture and chemical materials commonly found in masonry structures (eg alkalis). To improve corrosion resistance, the shank may be made of metallic material having a corrosion-resistant finish, for example a coating such as galvanised metallic material.

The ridges conveniently each have a height with reference to the land which is substantially uniform between the axial extremities of the respective ridge.

Alternatively, the ridges may each include a part length which is non-uniform in height with reference to the land and which decreases with progression of the respective ridge helix towards the bore entry end of the shank.

At least the ridges and/or at least the groove may be coated with a friction-reducing material such as a fluorocarbon polymer although in practice this may be abraded to the point of removal except in soft masonry substrates such as light weight autoclaved aerated cement.

In order to facilitate self-tapping, the helix angle of the helical ridge is at least 8° and preferably at least 10° as noted earlier. Conveniently, the helix angle of the groove will be in the range 15° to 40° with an angle of 30° or 35° being preferred.

A helix angle of 8° to 10° on a relatively large diameter shank (eg 22.5mm) will readily provide a land width equal to the 4mm minimum referred to earlier and thus when secured in-bore, sections of substrate material of at least 4mm in axial size between disturbances of the substrate material by the thread of the fixing device. However, with the objective of providing that the axial lengths of such material should be a maximum balanced against the need for adequate radial penetration into the substrate material to provide thread securement, the interspace land will have a width measured axially with respect to the shank of at least 50% of the land shank diameter.

Preferably, the land width measured axially of the shank will be about 5mm or more such as in the range 4mm to 25mm (eg 6mm to 15mm) and generally will be 60% to 85% (eg 75%) of the land shank diameter.

With the above requirements in mind, the pitch of the groove will generally be between 8mm and 14mm with a preferred pitch being about 11mm. The ridges will conveniently be V-cross-section ridges but may have another configuration (for example, a cross-section generally of V-configuration may have a radius at the apex). In the case of V-cross-section ridges, the sides of the ridges at the apices of the ridges subtend with each other an angle of about 60°.

The shank preferably has a head in the form of a screw-threaded continuation of the shank wherein the thread comprises a helical ridge and a groove extending in parallel so as to present an alternation of ridge turns and groove turns along said continuation. A slot may be provided for drive purposes as may edges defining a hexagon configuration or a depression of hexagonal configuration and, of course, an enlargement may be provided at the head to present any such slot, hexagonal cross-section or hexagonal recess or countersunk or raised countersunk features.

In addition to the method defined, the invention includes within its scope any of the fixing devices as hereinbefore defined in connection with the fixing method of the invention.

Embodiments of the invention will now be described, by way of example only, reference being made to the accompanying drawings in which:-
Figure 1 shows a first embodiment of fixing device according to the invention;
Figure 2 shows a second alternative embodiment of fixing device according to the invention;
Figures 3(a) and 3(b) show two stages in the installation of a third embodiment of fixing device according to the invention similar to that shown in Figure 2 in a masonry substrate;
Figure 4 shows schematically a screw heading station forming part of a screw production line;
Figures 5(a), 5(b) and 5(c) show various stages in the plastic deformation of a cut off blank wire section in a screw heading process using the apparatus shown in Figure 4;
Figure 6 shows schematically a thread rolling station forming part of a screw production line for use in forming a ridge-groove-ridge configuration according to the invention;
Figures 7(a) to 7(c) show the die construction reltive to Figure 6 in greater detail; and
Figure 8 is a single ridge version of the embodiment shown in Figure 1.

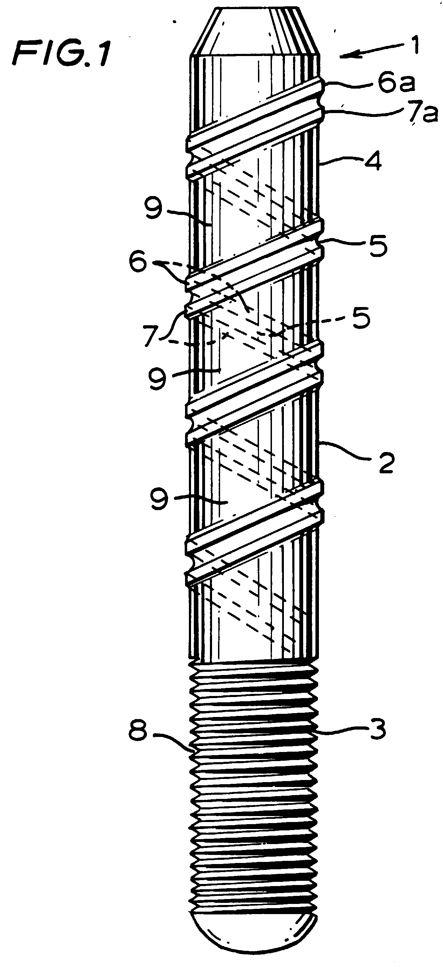

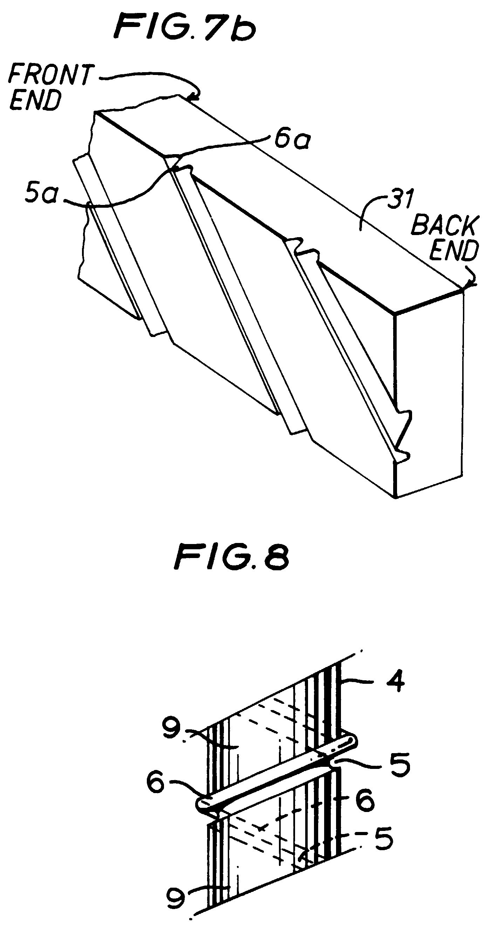

The fixing devices shown in Figures 1, 2 and 3 are designated generally by the reference numeral 1 (and the same applies to Figure 8). In the Figures, like parts are designated by like reference numerals.

The fixing device shown in Figure 1 comprises (and similarly in Figure 8) a steel shank 2 of solid right circular cylindrical configuration comprising a top section 3 and a bottom or bore-entry section 4. Bottom section 4 has a groove 5 formed in the surface of the blank shank by cold thread rolling. Groove 5 has a helical configuration and extends spirally around the circumference of the bottom section 4 of shank 2 and is co-extensive longitudinally with that section.

Groove 5 is defined between two parallel marginal ridges 6 and 7 (one of which is absent in favour of one ridge and a deeper groove in the case of Figure 8), formed of shank material displaced from the groove 5 by the plastic deformation which occurs during thread rolling.

Top section 3 of shank 2 is formed with a conventional male screw thread 8 to enable threaded engagement of articles to the fixing element 1 when the fixing element 1 is secured in a masonry structure.

The axial extremities of the shank 2 are formed having regard to the practicalities of the fixing device 1 in use. Thus, for example, the extremity of the bottom portion 4 of shank 2 has a frustoconical configuration to assist bore entry of that extremity. The extremity of the top portion 3 of shank 2 has a domed configuration and is provided with a screwdriver engagement slot, cross-recess, hexagon or square drive (not shown) or screw head enlargement such as one configured with a countersink.

It will be noted that a land 9 is provided between the turns of the ridge-groove-ridge configuration. In the embodiment shown in Figure 1, the land has a width between turns as measured axially of the shank 2 of 7mm. The shank land diameter in the example depicted is 10.4mm and the pitch of the groove 5 is 11mm, the helix angle of the spiral being 25°. The groove depth relative to the land level is 0.5mm and the ridge height relative to the land level is 0.5mm. Of course, fixing devices conforming generally to the embodiment described may be configured with different values for one or more of the above parameters)

Turns 6(a) and 7(a) of ridges 6 and 7 are configured by means not shown to provide a self-tapping capacity in a masonry structure.

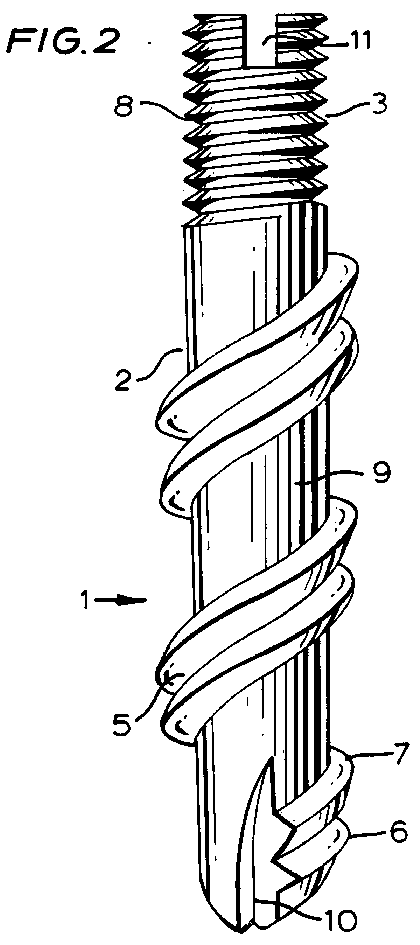

The fixing device embodiment shown in Figure 2 is broadly similar to that shown in Figure 1. However, in this embodiment the thread represented by the ridge-groove-ridge turns is much coarser and the in-bore extremity of the shank 2 is slotted by means of slot 10 to provide for self-tapping. The device of Figure 2 is preferred over that of Figure 1.

Threaded upper section 3 has a flat top provided with screwdriver engagement slot 11. The remaining features of the fixing device shown in Figure 2 will be readily understood from the Figure itself, in comparison with Figure 1, like parts being designated by like reference numerals.

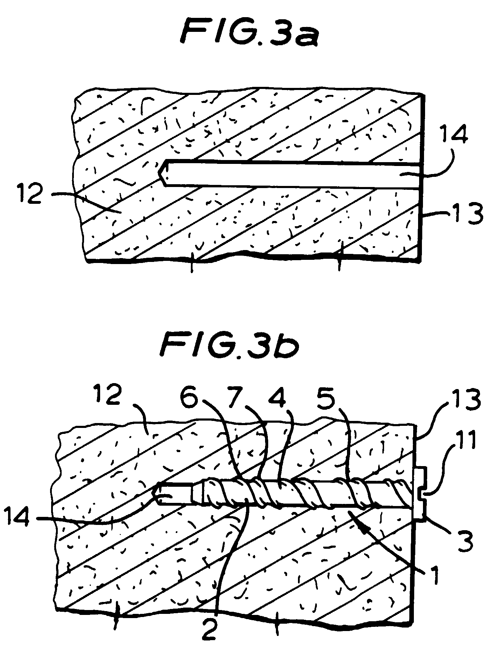

Figure 3a shows diagrammatically a masonry substrate 12 whose surface 13 is perforated by a right circular cylindrical bore 14 drilled into the masonry substrate 12 using a low speed power driven masonry drill bit without hammer action (although, of course, hammer drilling or rotary impact drilling may be adopted as an alternative). In use of fixing devices according to the invention, the first stage in procedures to install the fixing device in a masonry structure is to drill a bore such as that depicted at 14 in Figure 3(a).

A fixing device according to the invention, such as that shown in Figure 1 or Figure 2 of the drawings, is offered up to the bore 14 and its extremity remote from the extremity configured for screwdriver engagement is inserted into the mouth of the bore 14. The fixing element is then rotated manually number of times until the threads 6, 7 start to engage by tapping a corresponding female thread in the outer portions of the wall of the bore 14. This practise is continued until finger turning becomes impractical. A screwdriver is then taken by the operator, engaged with the other extremity of the shank 2 by means of the slot provided for the purpose and further turning effected. The thread represented by ridges 6, 7 continues with this motion to form its own female thread with gradually increasing extent along the length of the internal surface of bore 14 until all of the bottom section 4 of shank 2 is received in the bore 14. This stage is depicted in Figure 3(b) where it will be seen that a slightly different embodiment of the fixing device according to the invention is shown in place. The fixing element shown in Figure 3(b) is one having a coarse thread sharper than that shown in Figure 1. Self-tapping grooves 10 traverse the ridge-groove-ridge configurations providing a thread-cutting facility along the length of the shank 2 analogously to the slot 10 shown in Figure 2.

Tabulated in Table 1 below are parameters for three specific examples, respectively, of the fixing devices shown in Figures 1, 2 and 3(b) of the drawings:-

**Table 1**

| Embodiment | Diameter (mm) | Groove Pitch (mm) | Helix (°) | Land Width (mm) | Groove Depth (mm) | Ridge Height (mm) |
|---|---|---|---|---|---|---|
| Figure 1 | 10.4 | 11 | 25 | 7 | 0.5 | 0.5 |
| Figure 2 | 10.4 | 14 | 30 | 10 | 0.5 | 1.5 |
| Figure 3(b) | 6.36 | 11 | 25 | 6.7 | 0.5 | 1.0 |

In Table 1, land width is measured between adjacent spaced ridges axially of the shank. Groove depth is measured relative to the level of the land and ridge height also is measured relative to the level of the land.

The following specific Example is intended to illustrate use and performance of fixing elements according to the invention relative to various prior art fixing devices:-

### Example

A number of fixing elements were tested in brickwork as set out at A to H in Table 2.

Bores of diameters 8mm, 10mm, 12mm and 14mm were pre-drilled in solid brick having a compressive strength of 20.5N/mm² (A to E, G and H) or of 15N/mm² (F) to various depth as recommended by the manufacturer or 5mm in excess of fixing device length using, for example, a conventional drill bit of appropriate size driven by a slow speed power drill without hammer action (a hammer action could equally be used).

Fixing elements, shorter than the bore depths, of various types and having diametric sizes of 6mm, 8mm, 10mm and 12mm were then selected as noted in Table 2 below and matched on the basis bore/element = 8/6, 10/8, 12/10 and 14/12 except as stated otherwise.

Matched elements were then introduced, to extents shown in Table 2, into matched bores.

Pull-out strengths (ie ultimate tensile strengths) were then determined by applying calibrated loads axially to the fixing elements in the direction of withdrawal. The results are shown in Table 2 and readily demonstrate at least comparable performance as compared to some multicomponent devices (Rawlbolt), whilst as compared to bore liners (Fischer Nylon Plug, Upat Ultra Plug) and direct fixtures (Rawl Spike), performance was superior. Expansion bolts, of course, suffer from disadvantages in terms of material costs, risk of substrate rupture and slower speed of installation.

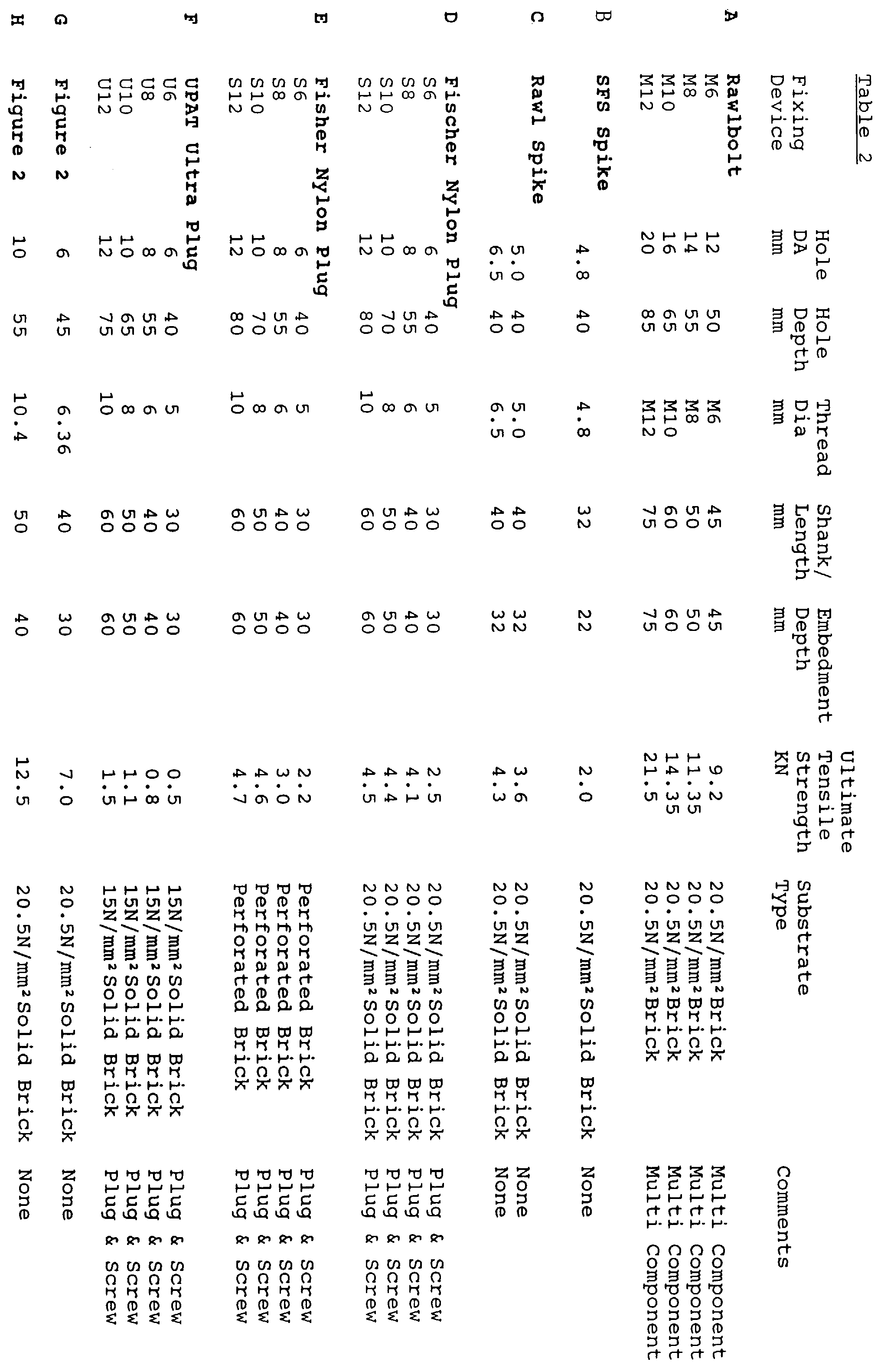

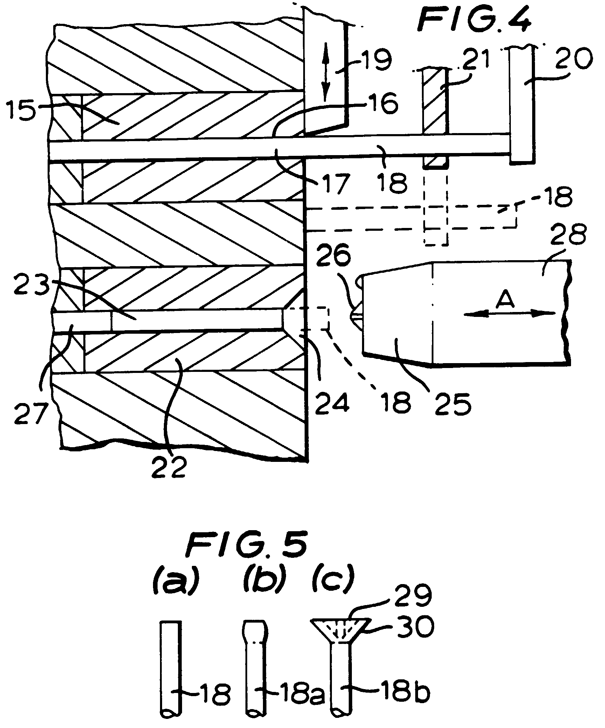

Referring to Figure 4, a screw heading station comprises a solid metallic block 15 formed with a right circular cylindrical uniform diameter bore 16. Steel wire 17 passes along bore 16 and is urged until its end abutts against stop 20. A cut-off knife 19 is mounted for reciprocatory motion radially across the mouth of bore 16 so as to sever the wire 17 to form a blank 18. A transfer finger mounted for reciprocatory motion parallel to that of cut-off knife 19 is provided for transferring cut off blank 18 a stage further in the heading operation as depicted at two points in Figure 4 in broken lines. At the maximum displacement of transfer finger 21, blank 18 is disposed in register with a bore 23 in solid metallic block 22, bore 23 being identical with bore 16 in block 15 except that bore 23 has a blind end represented by the crown of a piston 27 moveable axially of bore 23 to provide for different desired lengths of fixing element. Whilst retained by transfer finger 21, blank 18 is displaced into bore 23 in block 22 by means of a first of two punches 25 mounted for reciprocatory motion in the directions of double headed arrow A shown in Figure 4.

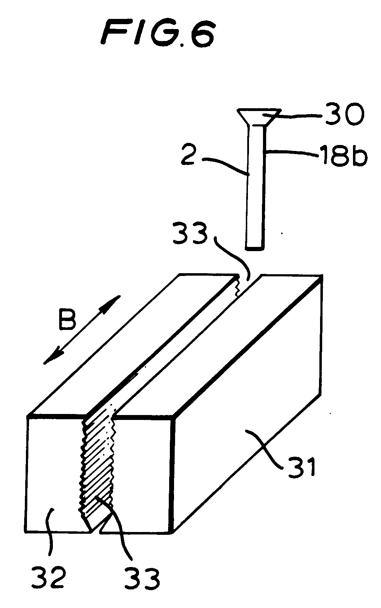

The mouth 24 of bore 23 is depressed into the body of block 22 and has the configuration of a countersink. The first of punches 25 drives blank 18 fully into bore 23 and produces the partial plastic deformation shown in Figure 5(b). The first punch 25 is provided with a plane punch face 28. The second punch 25 is provided with a punch face 28 having a structure 26 disposed thereon for forming in the head of the fixing device a screw engagement depression 29 having a so-called Posidrive configuration. The action of the second of the two punches 25 completes plastic deformation of the terminal end of blank 18 to form the head 30 shown in Figure 5(c).

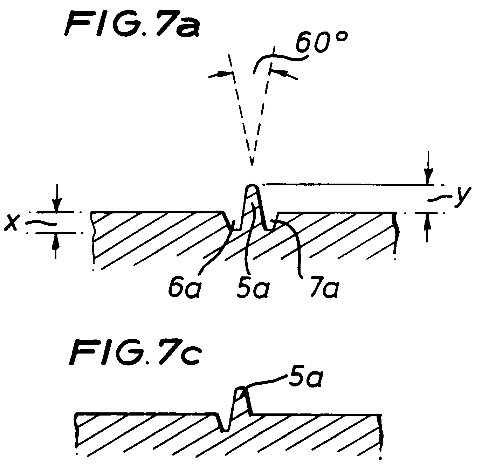

The thread rolling station shown in Figures 6 and 7 comprises a fixed die 31 and a displaceable die 32. The two dies are spaced apart to form jaw 33, the gap there between being equal to the core diameter of the product being rolled. Die 32 is displaceable in reciprocatory fashion according to the arrow B shown in Figure 6. In use, headed blank 18b is inserted into jaw 33 and thus between the fixed and moving dies 31, 32 by manual or mechanical means (eg a mechanical feed finger) as is known in the thread rolling art. The vertical position of the blank in relation to the fixed and moving die is governed by a work rest on which the blank 18b rests prior to introduction to the dies by the feed finger. The operational sequence is for the moving die to move clear of being parallel with the fixed die 31 in the direction of arrow B. Blank 18b is then transferred by the feed finger into the work rest and pushed against and between the leading edge of moving die 32 and the back edge of fixed die 31. The reciprocating action of the joving die 32 then carries the blank 18b between them, during which time the blank 18b is plastically deformed to the face of the dies, as the blank rolls along the faces thereof, to form ridge-groove-ridge convolutions as depicted in Figures 1, 2 and 3(b); a die groove corresponding to a ridge on the fixing element is shown at 6a and another at 7a whilst ridge 5a corresponds to groove 5 of the fixing element.

As compared to two-part fixing systems, fixing elements according to the invention provide efficiency of installation and greater security of fixture in terms of pull-out strength. As shown in Table 2 hereinbefore, pull-out strength performance at least in brick is superior to most expansion bolts and plastics fixings in brickwork. The fixing devices according to the invention provide secure fixture in bores in masonry sustrates ranging from brick, light-weight aerated autoclaved cement blockwork and various forms of concrete without the problems associated with expansion bolts due to the risk of rupture of the substrate material. Fixing elements according to the invention can also easily be manufactured by the steps of cold forging and thread rolling, bright zinc plating and heat treatment without resort to complex assembly operations such as are normally associated with an expansion bolt. This produces economics in terms of materials and manufacturing costs as well as the economics associated with relative ease of installation.

## Claims

1. A method of fixing to masonry or timber substrates wherein a bore is formed in said substrate and a fixing device (1) is introduced into said bore, the fixing device (1) comprising a shank (2) having a bore entry end (4) and an opposed end (3) separated from the bore entry end (4) by the length of the shank (2), at least a portion of the shank length being configured with a helical groove (5) formed in the blank circumference of the shank (2), the groove (5) being defined adjacent a helical ridge (6) juxtaposed to the side of the groove (5) or between a pair of such ridges (6, 7) juxtaposed one either side thereof, said ridge(s) (6, 7) being upstanding from the blank circumference of the shank (2) so as to function in use as male thread, said helical ridge(s) (6, 7) and defined helical groove (5) forming a helical configuration whose convolutions are spaced apart by an intervening land (9) in relation to which the ridge(s) (6, 7) is raised and the groove (5) is depressed, said land (9) having a width measured axially with respect to the shank (2) of at least 4mm and at least 50% of the land shank diameter, and the helix angle of the helical ridge (6, 7) being at least 8°.

2. A method as claimed in Claim 1 wherein the shank (2) is made of a metallic material which is plastically deformable by cold rolling through a die set configured to form the helical ridge(s) (6,7) and helical groove (5).

3. A method as claimed in Claim 1 or Claim 2 wherein the or each of the ridges (6, 7) has a height with reference to the land (9) which is substantially uniform between the axial extremities of the respective ridge (6, 7).

4. A method as claimed in Claim 1 or Claim 2 wherein the or each of the ridges (6, 7) includes a part length which is non-uniform in height with reference to the land (9) and which decreases with progression of the respective ridge helix towards the bore entry end (4) of the shank (2).

5. A method as claimed in any preceding claim wherein the shank (2) is made of ferrous metallic material.

6. A method as claimed in Claim 5 wherein the metallic material is a ferrous alloy.

7. A method as claimed in Claim 6 wherein the ferrous alloy is stainless steel.

8. A method as claimed in Claim 5 or Claim 6 wherein said shank (2) is made of metallic material having a corrosion-resistant coating.

9. A method as claimed in Claim 8 wherein the shank (2) is made of galvanized metallic material.

10. A method as claimed in any preceding claim wherein at least the ridge(s) (6, 7) and the groove (5) are coated with a friction-reducing material.

11. A method as claimed in Claim 10 wherein the friction-reducing material is fluorocarbon polymer.

12. A method as claimed in any preceding claim wherein the pitch of the groove (5) is between 8mm and 14mm.

13. A method as claimed in Claim 12 wherein the pitch of the groove (5) is about 11mm.

14. A method as claimed in any preceding claim wherein the helix angle of the groove (5) is from 15° to 40°.

15. A method as claimed in Claim 14 wherein the helix angle of the groove (5) is about 35°.

16. A method as claimed in any preceding claim wherein the ridge(s) (6, 7) is a V-cross-section ridge (5).

17. A method as claimed in Claim 16 wherein sides of the ridge(s) (6, 7) at the apices of the ridge(s) (6, 7) subtend with each other at an angle of about 60°.

18. A method as claimed in any preceding claim wherein the shank (2) has a head (8) in the form of screw threaded continuation (8) of the shank (2) wherein the thread (8) comprises a helical ridge and groove extending in parallel so as to present a continuous alternation of ridge turns and groove turns along said continuation.

19. A fixing device for use in a method of fixing to masonry or timber substrates wherein a bore is formed in said substrate and the fixing device (1) is introduced into said bore, the fixing device (1) comprising a shank (2) having a bore entry end (4) and an opposed end (3) separated from the bore entry end (4) by the length of the shank (2), at least a portion of the shank length being configured with a helical groove (5) formed in the blank circumference of the shank (2), the groove (5) being defined adjacent a helical ridge (6) juxtaposed to the side of the groove (5) or between a pair of such ridges (6, 7) juxtaposed one either side thereof, said ridge(s) (6, 7) being upstanding from the blank circumference of the shank (2) so as to function in use as male thread, said helical ridge(s) (6, 7) and defined helical groove (5) forming a helical configuration whose convolutions are spaced apart by an intervening land (9) in relation to which the ridge(s) (6, 7) is raised and the groove (5) is depressed, said land (9) having a width measured axially with respect to the shank (2) of at least 4mm and at least 50% of the land shank diameter, and the helix angle of the helical ridge (6, 7) being at least 8°.

## Patentansprüche

1. Verfahren zum Befestigen von Substraten an einem Mauerwerk oder Balkenwerk, bei welchem eine Bohrung in das Substrat eingebracht wird und eine Befestigungsvorrichtung (1) in die Bohrung eingeführt wird, wobei die Befestigungsvorrichtung (1) einen Schaft (2) mit einem Bohrungseingangsende (4) und einem gegenüberliegenden Ende (3), das von dem Bohrungseingangsende (4) durch die Länge des Schaftes (2) beabstandet ist, umfaßt wobei wenigstens ein Abschnitt der Schaftlänge mit einer in den glatten Umfang des Schaftes (2) eingeformten Spiralnut (5) versehen ist, wobei die Nut (5) benachbart zu einer Spiralrippe (6), die an der Seite der Nut (5) angeordnet ist, oder zwischen einem Paar derartiger Rippen (6, 7), die auf jeder Seite davon angeordnet sind, definiert ist, wobei die Rippe(n) (6, 7) von dem glatten Umfang des Schaftes (2) vorstehen, um so im Gebrauch als Außengewinde zu wirken, wobei die Rippe(n) (6, 7) und die definierte Spiralnut (5) eine schraubenförmige Konfiguration bilden, deren Schraubengänge durch eine eingreifende Fase (9) von einander beabstandet sind, in bezug auf welche die Rippe(n) (6, 7) erhöht ist/sind und die Nut (5) abgesenkt ist, wobei die Fase (9) eine in bezug auf den Schaft (2) axial gemessene Breite von wenigstens 4 mm und mindestens 50 % des Fasenschaftdurchmessers aufweist, und wobei der Schrägungswinkel der Spiralrippen (6, 7) wenigstens 8° beträgt.

2. Verfahren nach Anspruch 1, bei welchem der Schaft (2) auf einem metallischen Material hergestellt ist, das durch Kaltwalzen mittels eines Führungsgestelles, welches konfiguriert ist, um die Spiralrippe(n) (6, 7) und die Spiralnut (5) zu bilden, plastisch deformierbar ist.

3. Verfahren nach Anspruch 1 oder 2, bei welchem die oder jede der Rippe(n) (6, 7) eine Höhe in bezug auf die Fase (9) aufweist, die im wesentlichen gleichförmig zwischen den axialen einander zugewandten Enden der jeweiligen Rippe (6, 7) ist.

4. Verfahren nach Anspruch 1 oder 2, bei welchem die oder jede der Rippe(n) (6, 7) eine Teillänge beinhaltet, die in einer Höhe in bezug auf die Fase (9) nicht gleichförmig ist und die mit Verlauf der entsprechenden Rippenschraubenlinie hin zu dem Bohrungseingangsende (4) des Schaftes (2) abnimmt.

5. Verfahren nach einem der vorhergehenden Ansprüche, bei welchem der Schaft (2) aus einem Eisenmetall hergestellt ist.

6. Verfahren nach Anspruch 5, bei welchem das Eisenmetall eine Eisenlegierung ist.

7. Verfahren nach Anspruch 6, bei welchem die Eisenlegierung ein rostfreier Stahl ist.

8. Verfahren nach Anspruch 5 oder 6, bei welchem der Schaft (2) aus einem metallischen Material mit einem korrosionsbeständigen Überzug hergestellt ist.

9. Verfahren nach Anspruch 8, bei welchem der Schaft (2) aus einem verzinkten metallischen Material hergestellt ist.

10. Verfahren nach einem der vorhergehenden Ansprüche, bei welchem wenigstens die Rippe(n) (6, 7) und die Nut (5) mit einem reibungsvermindernden Material überzogen sind.

11. Verfahren nach Anspruch 10, bei welchem das reibungsvermindernde Material ein Fluorkohlenstoff-Polymer ist.

12. Verfahren nach einem der vorhergehenden Ansprüche, bei welchem die Schraubensteigung der Nut (5) zwischen 8 mm und 14 mm beträgt.

13. Verfahren nach Anspruch 10, bei welchem die Schraubensteigung der Nut (5) ungefähr 11 mm beträgt.

14. Verfahren nach einem der vorhergehenden Ansprüche, bei welchem der Schraubenlinienwinkel der Nut (5) von 15° bis 40°. beträgt.

15. Verfahren nach Anspruch 14, bei welchem der Schraubenlinienwinkel ungefähr 35° beträgt.

16. Verfahren nach einem der vorhergehenden Ansprüche, bei welchem die Rippe(n) (6, 7) eine im Querschnitt V-förmige Rippe (5) ist.

17. Verfahren nach Anspruch 16, bei welchem Seiten der Rippe(n) (6, 7) an den Scheiteln der Rippe(n) (6, 7) einander in einem Winkel von etwa 60° gegenüberliegen.

18. Verfahren nach einem der vorhergehenden Ansprüche, bei welchem der Schaft (2) einen Kopf (8) in Form einer Gewindeverlängerung (8) des Schaftes (2) aufweist, wobei das Gewinde (8) eine Spiralrippe und -nut umfaßt, die sich parallel erstrecken, um so eine kontinuierliche Wechselfolge von Rippenschraubengängen und Nutenschraubengängen längs der Verlängerung darzustellen.

19. Befestigungsvorrichtung zur Verwendung in einem Verfahren zum Befestigen von Substraten an einem Mauerwerk oder Balkenwerk, bei welchem eine Bohrung in das Substrat eingebracht wird und eine Befestigungsvorrichtung (1) in die Bohrung eingeführt wird, wobei die Befestigungsvorrichtung (1) einen Schaft (2) mit einem Bohrungseingangsende (4) und einem gegenüberliegenden Ende (3), das von dem Bohrungseingangsende (4) durch die Länge des Schaftes (2) beabstandet ist, umfaßt, wobei wenigstens ein Abschnitt der Schaftlänge mit einer in den glatten Umfang des Schaftes (2) eingeformten Spiralnut (5) versehen ist, wobei die Nut (5) benachbart zu einer Spiralrippe (6), die an der Seite der Nut (5) angeordnet ist, oder zwischen einem Paar derartiger Rippen (6, 7), die auf jeder Seite davon angeordnet sind, definiert ist, wobei die Rippe(n) (6, 7) von dem glatten Umfang des Schaftes (2) vorstehen, um so im Gebrauch als Außengewinde zu wirken, wobei die Rippe(n) (6, 7) und die definierte Spiralnut (5) eine schraubenförmige Konfiguration bilden, deren Schraubengänge durch eine eingreifende Fase (9) von einander beabstandet sind, in bezug auf welche die Rippe(n) (6, 7) erhöht ist/sind und die Nut (5) abgesenkt ist, wobei die Fase (9) eine in bezug auf den Schaft (2) axial gemessene Breite von wenigstens 4 mm und mindestens 50 % des Fasenschaftdurchmessers aufweist, und wobei der Schrägungswinkel der Spiralrippen (6, 7) wenigstens 8° beträgt.

## Revendications

1. Procédé pour fixer des substrats en bois ou en maçonnerie dans lequel un perçage est formé dans ledit substrat et un dispositif de fixation (1) est introduit dans ledit perçage, le dispositif de fixation (1) comprenant une tige (2) ayant une extrémité (4) d'entrée de perçage et une extrémité opposée (3) séparée de l'extrémité (4) d'entrée de perçage par la longueur de la tige (2), au moins une partie de la longueur de la tige étant formée avec une gorge hélicoïdale (5) formée dans la circonférence nue de la tige (2), la gorge (5) étant définie adjacente à une nervure hélicoïdale (6) juxtaposée au côté de la gorge (5) ou entre une paire de telles nervures (6, 7) juxtaposées de chaque côté de celle-ci, la ou chaque nervure (6, 7) étant dressée depuis la circonférence nue de la tige (2) de façon à fonctionner en utilisation comme un filetage mâle, la ou chaque nervure hélicoïdale (6, 7) et ladite gorge hélicoïdale (5) définie formant une configuration hélicoïdale dont les convolutions sont espacées par une zone morte (9) par rapport à laquelle la ou chaque nervure (6, 7) est en saillie et la gorge (5) est en creux, ladite zone (9) ayant une largeur mesurée axialement par rapport à la tige (2) de au moins 4 mm et de au moins 50 % du diamètre de la tige dans cette zone, et l'angle d'hélice de la nervure hélicoïdale (6, 7) étant de au moins 8°.

2. Procédé selon la revendication 1, dans lequel la tige (2) est faite d'un matériau métallique qui est déformé plastiquement par laminage à froid à travers un jeu de matrices conformées pour former la ou chaque nervure hélicoïdale (6, 7) et la gorge hélicoïdale (5).

3. Procédé selon la revendication 1 ou 2, dans lequel la ou chaque nervure (6, 7) a une hauteur par rapport à la zone (9) qui est sensiblement uniforme entre les extrémités axiales de la nervure respective (6, 7).

4. Procédé selon la revendication 1 ou 2, dans lequel la ou chaque nervure (6, 7) inclut une longueur partielle qui est non uniforme en hauteur par rapport à la zone (9) et qui diminue avec la progression de l'hélice de nervure respective vers l'extrémité d'entrée de perçage (4) de la tige (2).

5. Procédé selon l'une quelconque des revendications précédentes, dans lequel la tige (2) est faite en un matériau métallique ferreux.

6. Procédé selon la revendication 5, dans lequel le matériau métallique est un alliage ferreux.

7. Procédé selon la revendication 6, dans lequel l'alliage ferreux est de l'acier inoxydable.

8. Procédé selon la revendication 5 ou 6, dans lequel ladite tige (2) est faite d'un matériau métallique ayant un revêtement résistant à la corrosion.

9. Procédé selon la revendication 8, dans lequel la tige (2) est faite d'un matériau métallique galvanisé.

10. Procédé selon l'une quelconque des revendications précédentes, dans lequel au moins la ou chaque nervure (6, 7) et la gorge (5) sont revêtues avec un matériau réduisant les frottements.

11. Procédé selon la revendication 10, dans lequel le matériau réduisant les frottements est un polymère fluorocarbone.

12. Procédé selon l'une quelconque des revendications précédentes, dans lequel le pas de la gorge (5) est entre 8 mm et 14 mm.

13. Procédé selon la revendication 12, dans lequel le pas de la gorge (5) est d'environ 11 mm.

14. Procédé selon l'une quelconque des revendications précédentes, dans lequel l'angle d'hélice de la gorge (5) est de 15 à 40°.

15. Procédé selon la revendication 14, dans lequel l'angle d'hélice de la gorge (5) est d'environ 35°.

16. Procédé selon l'une quelconque des revendications précédentes, dans lequel la ou chaque nervure (6, 7) est une nervure (5) à section transversale en V.

17. Procédé selon la revendication 16, dans lequel les côtés de la ou chaque nervure (6, 7) au sommet de la ou chaque nervure (6, 7) définissent l'un avec l'autre un angle d'environ 60°.

18. Procédé selon l'une quelconque des revendications précédentes, dans lequel la tige (2) a une tête (8) sous la forme d'un prolongement (8) fileté de vis de la tige (2) dans lequel le filetage (8) comprend une gorge et nervure hélicoïdales s'étendant parallèlement de manière à présenter une alternance continue de tours de nervure et de tours de gorge le long dudit prolongement.

19. Dispositif de fixation destiné à être utilisé dans un procédé de fixation de substrats en bois ou en maçonnerie dans lequel un perçage est formé dans ledit substrat et un dispositif de fixation (1) est introduit dans ledit perçage, le dispositif de fixation (1) comprenant une tige (2) ayant une extrémité (4) d'entrée de perçage et une extrémité opposée (3) séparée de l'extrémité (4) d'entrée de perçage par la longueur de la tige (2), au moins une partie de la longueur de la tige étant formée avec une gorge hélicoïdale (5) formée dans la circonférence nue de la tige (2), la gorge (5) étant définie adjacente à une nervure hélicoïdale (6) juxtaposée au côté de la gorge (5) ou entre une paire de telles nervures (6, 7) juxtaposées de chaque côté de celle-ci, la ou chaque nervure (6, 7) étant dressée depuis la circonférence nue de la tige (2) de façon à fonctionner en utilisation comme un filetage mâle, la ou chaque nervure hélicoïdale (6, 7) et ladite gorge hélicoïdale (5) définie formant une configuration hélicoïdale dont les convolutions sont espacées par une zone morte (9) par rapport à laquelle la ou chaque nervure (6, 7) est en saillie et la gorge (5) est en creux, ladite zone (9) ayant une largeur mesurée axialement par rapport à la tige (2) de au moins 4 mm et de au moins 50 % du diamètre de la tige dans cette zone, et l'angle d'hélice de la nervure hélicoïdale (6, 7) étant de au moins 8°.
